# EUROPÄISCHE PATENTSCHRIFT

(11) **EP 0 565 916 B1**
(45) Veröffentlichungstag und Bekanntmachung des Hinweises auf die Patenterteilung: **17.04.1996**
(21) Anmeldenummer: 93104808.6
(22) Anmeldetag: 24.03.1993
(51) Int. Cl.: B29C 49/56, B29C 33/20, F16F 1/36, C07D 239/26, C07C 69/76, G02F 1/13

(54) **Vorspanneinrichtung**
Pretensioning device
Dispositif de pré-tension

(30) Priorität: 15.04.1992 DE 4212584
(43) Veröffentlichungstag der Anmeldung: 20.10.1993
(73) Patentinhaber: KRUPP CORPOPLAST MASCHINENBAU GMBH, D-22123 Hamburg (DE)
(72) Erfinder: Linke, Michael, W-2070 Ahrensburg (DE); Peterko, Marek, W-2082 Tornesch (DE); Albrecht, Peter, W-2050 Hamburg 80 (DE)
(74) Vertreter: Klickow, Hans-Henning

(56) Entgegenhaltungen:
- EP-A- 0 221 872
- WO-A-92/04556
- DE-A- 3 439 614
- US-A- 3 829 264

## Beschreibung

Die Erfindung betrifft eine Vorrichtung zum Aufbringen einer Vorspannung auf Bauelemente, insbesondere zur Beaufschlagung von im Bereich vom Formträgern gehalterten Blasformelementen, die im Bereich einer Trennfuge aneinandergrenzen und jeweils bereichsweise einen Innenraum umschließen, der zur Ausformung eines nach einem Blasverfahren gefertigten Behälters vorgesehen ist.

Bei der Produktion von Behältern aus thermoplastischen Werkstoffen, insbesondere bei der Produktion von Behältern aus biaxial orientiertem Polyäthylenterephthalat, besteht ein typischer Arbeitsablauf darin, daß die Behälter beispielsweise aus einem gespritzen Vorformling, der geeignet thermisch konditioniert wurde, durch Drucklufteinwirkung in den Behälter umgeformt werden. Eine solche Vorrichtung ist beispielsweise aus US-A-3 829 264 bekannt. Es treten dabei Drücke im Bereich von etwa 40 bar auf, die dazu führen, daß die den Innenraum umschließenden Blasformelemente trotz der Verriegelung der Formträger nicht mehr fest aneinander anliegen, sondern geringfügig auseinandergedrückt werden. Durch dieses Auseinanderdrücken weicht der produzierte Behälter von der vorgesehenen Form ab. Insbesondere vergrößert sich dabei das Behältervolumen und der zwischen den Blasformelementen auftretende Spalt bildet sich auf dem Behälter als Erhebung ab.

Die bislang bekannten Vorrichtungen zur Aufbringung von Vorspannungen sind nicht in hinreichender Weise dafür geeignet, sowohl eine preiswerte Realisierung, eine einfache Montage und eine lange Lebensdauer zu ermöglichen.

Aufgabe der vorliegenden Erfindung ist es daher, eine Vorrichtung der einleitend genannten Art derart auszubilden, daß bei einem einfachen mechanischen Aufbau eine hohe Zuverlässigkeit sowie eine lange Benutzungsdauer ermöglicht wird.

Diese Aufgabe wird erfindungsgemäß dadurch gelöst, daß in ein Elastomer mindestens bereichsweise ein Positionierelement eingebettet ist, das mit einem Abstand von einem Umfangselement umschlossen ist und daß zwischen dem Umfangselement und dem Positionierelement zur Ausbildung einer elastischen Verbindung mindestens ein Teil des Elastomers angeordnet ist.

Durch die Verbindung des Positionierelementes mit dem Umfangselement durch ein Elastomer wird nach einer Auslenkung des Positionierelementes relativ zum Umfangselement durch das elastisch verformte Elastomer eine Rückstellkraft bereitgestellt, die zu einer Rückführung des Positionierelementes in die Ausgangslage führt. Darüber hinaus erfolgt durch das Elastormer eine Abdichtung, die es ermöglicht, ohne zusätzliche wesentliche Abdichtungsmaßnahmen beispielsweise ein gasförmiges oder ein flüssiges Druckmedium zur Verstellung des Positionierelementes zu verwenden. Der Abstand zwischen dem Positionierelement und dem Umfangselement wird derart bemessen, daß ein ausreichendes Volumen an Elastomer vorhanden ist, das ausreichend elastisch verformbar ist, um eine Vielzahl von Auslenkungsbewegungen durchführen zu können.

Gemäß einer bevorzugten Ausführungsform der Erfindung ist vorgesehen, daß das Positionierelement und das Umfangselement im Bereich von Vorder- und Rückseiten, die von einem zwischen dem Umfangselement und dem Positionierelement angeordneten Zwischenraum verbunden sind, jeweils mit einer Elastomerschicht versehen sind, die in die zwischen dem Umfangselement und dem Positionierelement angeordnete elastische Verbindung einmünden. Durch diese Beschichtung werden sowohl die abdichtenden Eigenschaften erhöht als auch ein zusätzliche Reservoir an Elastomer bereitgestellt, das für die elastische Verformung verfügbar ist. Darüber hinaus wird der Kontakt des Elastomers mit dem Positionierelement und dem Umfangselement verbessert, so daß die Gefahr eines Auftretens von Ablösungseffekten verringert wird.

Gemäß einer weiteren bevorzugten Ausführungsform der Erfindung ist vorgesehen, daß als Elastomer vulkanisiertes Gummi verwendet wird. Vulkanisiertes Gummi weist eine hohe Dauerelastizität auf und haftet bei einer unmittelbaren Vulkanisierung auf die Oberflächen des Umfangselementes und des Positionierelementes sehr gut auf den von ihm bedeckten Oberflächen.

Gemäß einer anderen bevorzugten Ausführungsform ist vorgesehen, daß sich das Umfangselement geschlossen um das Positionierelement herumerstreckt und das Positionierelement im wesentlichen plattenförmig ausgebildet ist. Die geschlossene Ausbildung des Umfangselementes ermöglicht eine gute Formbeständigkeit bei einer Einwirkung von das Positionierelement verstellenden Drücken. Darüber hinaus wird eine zuverlässige Führung für das Positionierelement bereitgestellt und eine mechanisch stabile Halterungsmöglickeit, beispielsweise im Bereich eines Formträgers, geschaffen. Durch die plattenförmige Ausbildung des Positionierelementes wird eine große Andruckfläche bereitgestellt. Hierdurch kann sowohl der Druck großflächig auf die Blasformelemente aufgebracht als auch eine große Angriffsfläche für die verstellend wirkenden Drücke bereitgestellt werden. Insbesondere ist vorgesehen, ein kleines Füllvolumen bereitzustellen, um einen schnellen Druckaufbau zu ermöglichen. Der Druckaufbau im Füllvolumen erfolgt gegenüber dem Druckaufbau im entstehenden Behälter zeitlich voreilend.

Weitere Einzelheiten der vorliegenden Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Fig. 1: eine Draufsicht auf eine Vorrichtung, die aus einem Umfangselement und einem Positionierelement ausgebildet ist, die von einem Elastomer miteinander verbunden sind,
- Fig. 2: einen vergrößerten Querschnitt gemäß Schnittlinie II-II in Figur 1,

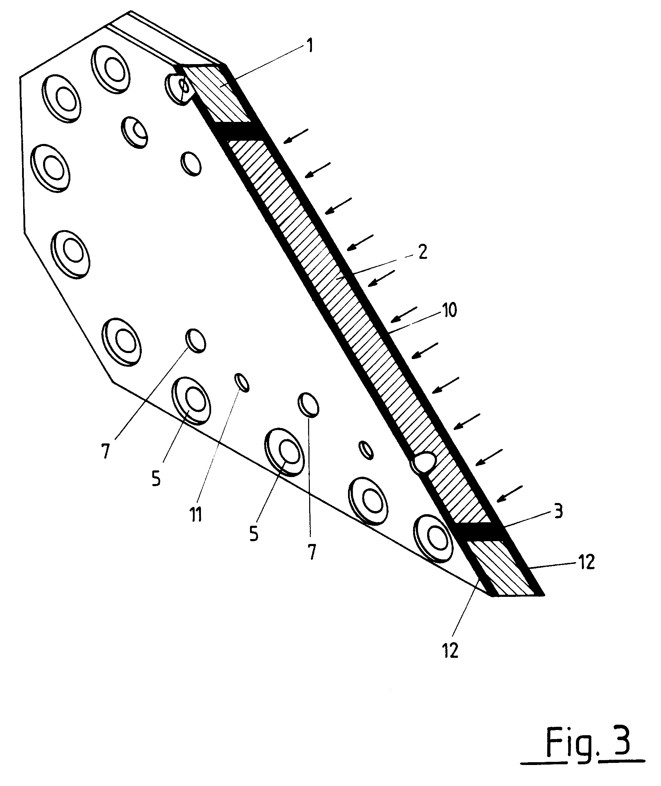

- Fig. 3: eine perspektivische Darstellung eines Querschnittes der Vorrichtung in Figur 1,

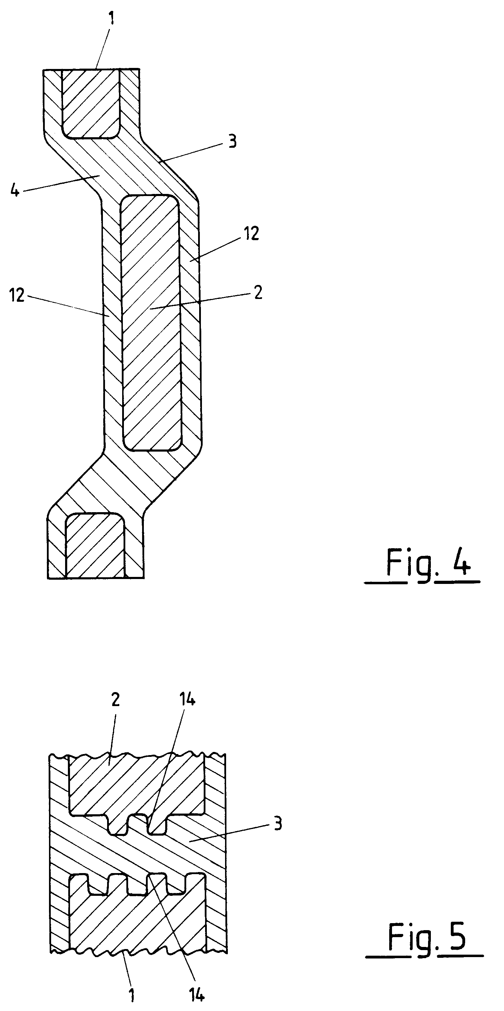

- Fig. 4: einen Querschnitt in einem ausgelenkten Zustand des Positionierelementes,
- Fig. 5: eine teilweise Darstellung eines Querschnittes einer Vorrichtung, bei der das Positionierelement und das Umfangselement mit einander zugewandten Profilierungen versehen sind **und**
- Fig. 6: einen vereinfachten Schnitt durch eine Blasstation, bei der in Formträgern von Adapterschalen gehalterte Blasformelemente vorgesehen sind und zwischen einer der Adapterschalen und einem der Formträger die von einem Druckmedium beaufschlagbare Vorspanneinrichtung angeordnet ist.

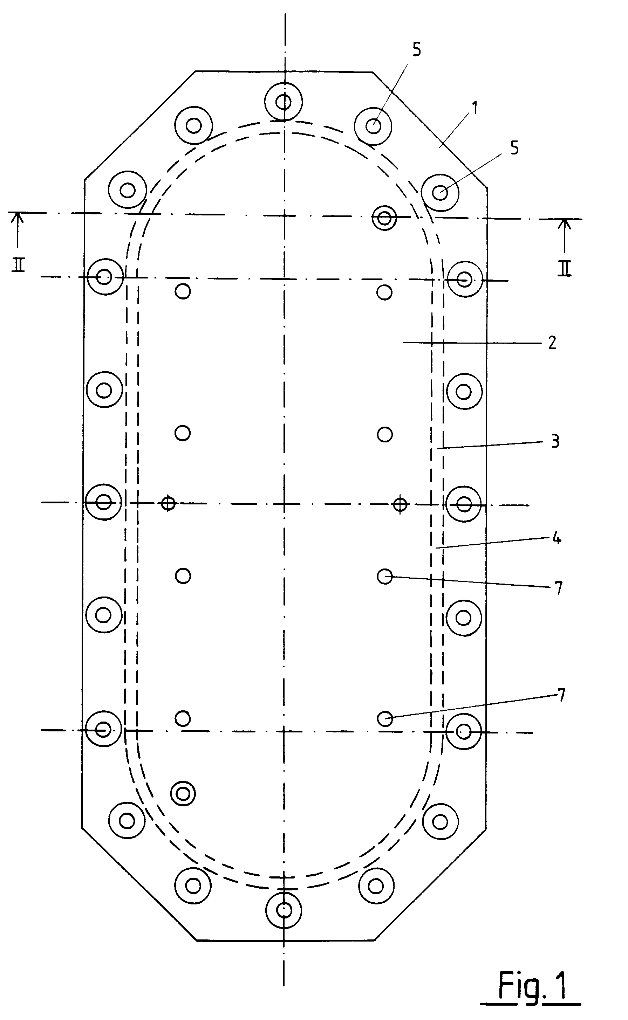

Eine Vorrichtung zur Erzeugung von Vorspannkräften besteht entsprechend der Ausführungsform in Figur 1 im wesentlichen aus einem Umfangselement (1) und einem Positionierelement (2), die durch einen Zwischenraum (3) voneinander getrennt sind. Der Zwischenraum (3) ist von einem Elastomer (4) ausgefüllt, das mit den Oberflächen des Umfangselementes (1) und des Positionierelementes (2) im Bereich des Zwischenraumes (3) verbunden ist.

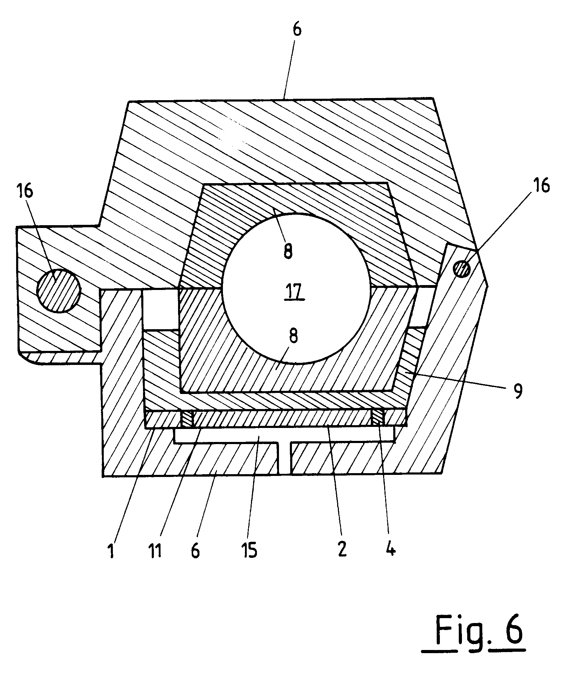

Das Umfangselement (1) erstreckt sich als ein geschlossener Ring und weist Bohrungen (5) auf, die eine Verschraubung mit in Figur 6 dargestellten Formträgern (6) ermöglichen. Im Bereich des Positionierelementes (2) sind Bohrungen (7) vorgesehen, die zu einer Verbindung mit einem Blasformelement (8) bzw. mit einer zwischen dem Blasformelement (8) und dem Formträger (6) angeordneten Adapterschale (9) dienen. Die Bohrungen (5,7) können durchgehend oder zur Unterstützung der abdichtenden Eigenschaften als Sacklöcher ausgebildet sein.

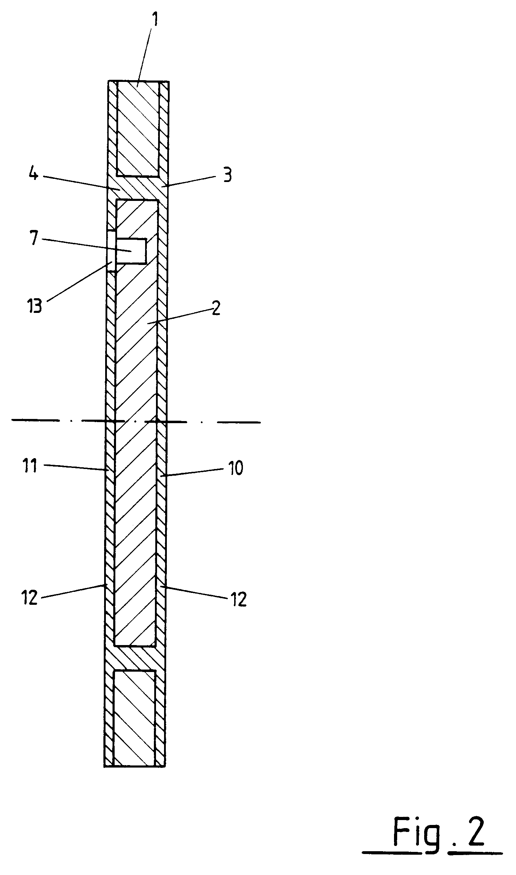

Aus der Darstellung in Figur 2 ist ersichtlich, daß das plattenförmige Positionierelement (2) und das Umfangselement (1) im Bereich von Vorderseiten (10) und Rückseiten (11) von Elastomerschichten (12) bedeckt sind, die durch das im Zwischenraum (3) angeordnete Elastomer (4) miteinander verbunden sind. Die Bohrungen (5,7) können mit ringförmigen Eingangsvertiefungen (13) versehen werden, um ein Versenken von Schraubenköpfen zu ermöglichen.

Zur Verbesserung der Verbindung des Elastomers (4) mit dem Umfangselement (1) bzw. dem Positionierelement (2) können im Bereich der einander zugewandten Begrenzungen des Umfangselementes (1) bzw. des Positionierelementes (2) Profilierungen (14) angeordnet werden. Durch die Profilierungen (14) entsteht ein Formschluß zwischen dem Elastomer und den Elementen (1,2), der die Auswirkung von Scherkräften verringert.

Bei der Anordnung der Vorspanneinrichtung im Bereich von Formträgern (6) gemäß Figur 6 ist im Bereich der der Adapterschale (9) abgewandten Rückseite (11) ein Hohlraum (15) vorgesehen, der zur Aufnahme eines Druckmediums vorgesehen ist, das die Verstellung des Positionierelementes (2) vornimmt. Grundsätzlich sind auch eine oder mehrere Druckmittelzuleitungen ohne separaten Hohlraum (15) ausreichend, da nach einem Abheben des Positionierelementes automatisch ein Innenraum entsteht. Statt der Verwendung eines gasförmigen oder flüssigen Druckmediums ist grundsätzlich auch eine mechanische Verstellung des Positionierelementes denkbar.

Eine mechanische Verriegelung der Formträger (6) relativ zueinander erfolgt durch Verriegelungselemente (16). Eines der Verriegelungselemente (16) kann gleichzeitig als Welle zur Verschwenkung der Formträger (6) relativ zueinander ausgebildet sein. Durch die Verspannung der Blasformelemente (8) relativ zueinander entsteht ein exakt definierter Innenraum (17), der auch bei einer Innendruckbeaufschlagung bei einem Expandieren eines Vorformlinges zu einem Behälter keine Volumenveränderung erfährt.

Zur Unterstützung einer Rückstellung des Positionierelementes (2) in eine Ausgangslage kann zusätzlich zur Rückstellkraft des Elastomers ein federndes Rückstellelement vorgesehen sein. Das Rückstellelement kann sowohl innerhalb der Formträger (6) als auch bei Verwendung geeigneter Verbindungselemente außerhalb der Formträger (6) angeordnet werden.

Zur Verringerung der Einwirkung von Scherkräften ist vorgesehen, daß Kantenbereiche des Umfangselementes (1) sowie des Positionierelementes (2) abgerundet ausgebildet sind. Zur ausreichenden Führung des Positionierelementes (2) durch das Umfangselement (1) sind jedoch zur Verbindung der abgerundeten Bereiche lineare Bereiche vorgesehen. Die linearen Bereiche des Umfangselementes (1) sowie des Positionierelementes (2) verlaufen im wesentlichen parallel zueinander.

Alternativ zu einer Ausbildung des Positionierelementes (2) aus einer einheitlichen Platte ist es auch möglich, mehrere Segmente miteinander zu kombinieren, die von dem Elastomer (4) durchdrungene Abstände zueinander aufweisen. Das Elastomer (4) kann sowohl als ein einheitliches Material, als auch als ein aus mehreren Komponenten zusammengesetztes bzw. als ein schichtförmig kombiniertes Material ausgebildet sein. Das dem Positionierelement (2) zugeordnete Blasformelement (8), bzw. die zugeordnete Adapterschale (9), ist durch das Zusammenwirken des Positionierelementes (2), des Umfangselementes (1) und des Elastomers (4) relativ zum Formträger (6) kardanisch aufgehängt. Hierdurch ist eine automatische Zentrierung relativ zu dem weiteren fest mit dem anderen Formträger (6) verbundenen Blasformelement (8) möglich.

Zur Durchführung der Blasformung eines Behälters wird die Blasform durch eine Entriegelung und Spreizung der Formträger (6) zunächst geöffnet. Anschließend wird der Vorformling in den Bereich des Innenraumes (17) transportiert und die Formträger (6) danach in die geschlossene Positionierung verschwenkt. Mit Hilfe der Verriegelungselemente (16) erfolgt nach einem Schließen eine mechanische Verbindung der Formträger (6) miteinander. Nach der Durchführung dieser mechanischen Verbindung wird der Hohlraum (15) mit einem Druckmedium beaufschlagt und dadurch eine Auslenkung des Positionierelementes (2) hervorgerufen. Durch diese Auslenkung wird das dem Positionierelement (2) zugewandte Blasformelement (8) gegen das weitere Blasformelement (8) gedrückt. Die bereitgestellte Andruckkraft übersteigt dabei maximal während der Blasverformung des Vorformlinges auftretende Kräfte, die aus dem Innendruck im Innenraum (17) resultieren. Nach einem Anliegen des fertiggeblasenen Behälters an den Blasformelementen (8) erfolgt ein Ablassen des Innendruckes und anschließend eine Druckentlastung im Bereich des Hohlraumes (15). Nach einer Entriegelung der Formträger (6) und einer Öffnung der Blasstation kann der fertigproduzierte Behälter entnommen werden.

## Patentansprüche

1. Vorrichtung zum Aufbringen einer Vorspannung auf Bauelemente, insbesondere zur Beaufschlagung von im Bereich von Formträgern (6) gehalterten Blasformelementen (8), die im Bereich einer Trennfuge aneinandergrenzen und jeweils bereichsweise einen Innenraum umschließen, der zur Ausformung eines nach einem Blasverfahren gefertigten Behälters vorgesehen ist, dadurch gekennzeichnet, daß in ein Elastomer (4) mindestens bereichsweise ein Positionierelement (2) eingebettet ist, das mit einem Abstand von einem Umfangselement (1) umschlossen ist und daß zwischen dem Umfangselement (1) und dem Positionierelement (2) zur Ausbildung einer elastischen Verbindung mindestens ein Teil des Elastomers (4) angeordnet ist.

2. Vorrichtung nach Anspruch 1, dadurch gekennzeichnet, daß mindestens im Bereich einer Vorderseite (10) oder einer Rückseite (11) der vom Umfangselement (1) und vom Positionierelement (2) aufgespannten Anordnung eine Elastomerschicht (12) angeordnet ist.

3. Vorrichtung nach Anspruch 1 oder 2, dadurch gekennzeichnet, daß sowohl im Bereich einer Vorderseite (10) als auch im Bereich einer Rückseite (11) eine Elastomerschicht (12) angeordnet ist und die Elastomerschichten (12) von dem im Zwischenraum (3) angeordneten Elastomer (4) miteinander verbunden sind.

4. Vorrichtung nach einem der Ansprüche 1 bis 3, dadurch gekennzeichnet, daß das Elastomer (4) mindestens bereichsweise als ein vulkanisiertes Gummi ausgebildet ist.

5. Vorrichtung nach einem der Ansprüche 1 bis 4, dadurch gekennzeichnet, daß das Umfangselement (1) als ein geschlossener Ring ausgebildet ist.

6. Vorrichtung nach einem der Ansprüche 1 bis 5, dadurch gekennzeichnet, daß das Positionierelement (2) im wesentlichen plattenförmig ausgebildet ist.

7. Vorrichtung nach einem der Ansprüche 1 bis 6, dadurch gekennzeichnet, daß das Positionierelement (2) zwischen dem Formträger (6) und dem Blasformelement (8) anordbar ist.

8. Vorrichtung nach einem der Ansprüche 1 bis 7, dadurch gekennzeichnet, daß das Positionierelement (2) zwischen dem Formträger (6) und einer das Blasformelement (8) halternden Adapterschale (9) anordbar ist.

9. Vorrichtung nach einem der Ansprüche 1 bis 8, dadurch gekennzeichnet, daß die Formträger (6) relativ zueinander durch Verriegelungselemente (16) mechanisch verriegelbar angeordnet sind.

## Claims

1. Device for applying an initial stress to structural elements, in particular for acting upon blow moulding elements (8) which are supported in the region of mould carriers (6), are contiguous in the region of a mould seam and in each case in sections enclose an inner chamber, which is provided for moulding a container manufactured by a blowing process, characterized in that a positioning element (2) is at least in sections embedded in an elastomer (4) and surrounded with clearance by a peripheral element (1) and that at least part of the elastomer (4) is disposed between the peripheral element (1) and the positioning element (2) so as to form a resilient connection.

2. Device according to claim 1, characterized in that an elastomer layer (12) is disposed at least in the region of a front side (10) or a rear side (11) of the arrangement defined by the peripheral element (1) and the positioning element (2).

3. Device according to claim 1 or 2, characterized in that an elastomer layer (12) is disposed both in the region of a front side (10) and in the region of a rear side (11) and the elastomer layers (12) are connected to one another by the elastomer (4) disposed in the gap (3).

4. Device according to one of claims 1 to 3, characterized in that the elastomer (4) at least in sections takes the form of a vulcanized rubber.

5. Device according to one of claims 1 to 4, characterized in that the peripheral element (1) takes the form of a closed ring.

6. Device according to one of claims 1 to 5, characterized in that the positioning element (2) is of a substantially plate-like construction.

7. Device according to one of claims 1 to 6, characterized in that the positioning element (2) may be disposed between the mould carrier (6) and the blow moulding element (8).

8. Device according to one of claims 1 to 7, characterized in that the positioning element (2) may be disposed between the mould carrier (6) and an adapter shell (9) supporting the blow moulding element (8).

9. Device according to one of claims 1 to 8, characterized in that the mould carriers (6) are arranged relative to one another so as to be mechanically lockable by means of locking elements (16).

## Revendications

1. Dispositif destiné à appliquer une précontrainte sur des éléments de construction, en particulier à mettre sous charge des demi-moules de soufflage (8) maintenus par des supports de moule (6), et décrits dans un plan de joint, et délimitant une chambre intérieure prévue pour le formage d'un récipient fabriqué selon un procédé de soufflage, caractérisé en ce qu'un élément de positionnement (2) est enrobé dans au moins une partie d'un élastomère (4), élément qui est entouré à distance par un élément périphérique (1), et en ce qu'au moins une partie de l'élastomère (4) est disposée entre l'élément périphérique (1) et l'élément de positionnement (2) pour constituer une liaison élastique.

2. Dispositif suivant la revendication 1, caractérisé en ce qu'une couche d'élastomère (12) est disposée au moins à une face avant (10) ou une face arrière (11) de la structure précontrainte par l'élément périphérique (1) et l'élément de positionnement (2).

3. Dispositif suivant la revendication 1 ou 2, caractérisé en ce qu'une couche d'élastomère (12) est disposée aussi bien à une face avant (10) qu'une face arrière (11), et en ce que les couches d'élastomère (12) sont reliées ensemble par l'élastomère (4) disposé dans l'interstice (3).

4. Dispositif suivant l'une des revendications 1 à 3, caractérisé en ce que l'élastomère (4) est réalisé, au moins partiellement, sous la forme d'un caoutchouc vulcanisé.

5. Dispositif suivant l'une des revendications 1 à 4, caractérisé en ce que l'élément périphérique (1) est réalisé sous la forme d'un anneau fermé.

6. Dispositif suivant l'une des revendications 1 à 5, caractérisé en ce que l'élément de positionnement (2) est réalisé sensiblement sous la forme d'une plaque.

7. Dispositif suivant l'une des revendications 1 à 6, caractérisé en ce que l'élément de positionnement (2) peut être disposé entre le support de moule (6) et un demi-moule (8).

8. Dispositif suivant l'une des revendications 1 à 7, caractérisé en ce que l'élément de positionnement (2) peut être disposé entre le support de moule (6) et une cuvette adaptatrice (9) maintenant en place le demi-moule (8).

9. Dispositif suivant l'une des revendications 1 à 8, caractérisé en ce que les supports de moule (6) sont disposés de façon à pouvoir être verrouillés mécaniquement l'un par rapport à l'autre par des éléments de verrouillage (16).
